# NEUE EUROPÄISCHE PATENTSCHRIFT

(11) **EP 1 588 620 B2**
(45) Veröffentlichungstag und Bekanntmachung des Hinweises auf die Entscheidung über den Einspruch: **20.11.2013**
(45) Hinweis auf die Patenterteilung: 16.05.2007
(21) Anmeldenummer: 05008696.6
(22) Anmeldetag: 21.04.2005
(51) Int. Cl.: A21C 3/02, A21C 3/10, A21C 11/10, A21C 11/12, A23G 3/00, A23G 3/02, A23G 3/06, A23G 3/12

(54) **Verfahren und Vorrichtung zur Herstellung eines Produkts aus Süsswarenmasse**
Process and apparatus for the preparation of a product based on a confectionery mass
Procédé et dispositif pour la préparation d'un produit basée sur une masse de confiserie

(30) Priorität: 23.04.2004 DE 102004019795
(43) Veröffentlichungstag der Anmeldung: 26.10.2005
(73) Patentinhaber: Sollich KG, 32105 Bad Salzuflen (DE)
(72) Erfinder: Sollich, Thomas, 32689 Kalletal (DE)
(74) Vertreter: Rehberg Hüppe + Partner

(56) Entgegenhaltungen:
- EP-A- 1 250 847
- DE-A1- 3 004 022
- US-A- 4 468 186
- US-A- 5 516 542
- Technische Zeichnung einer von der Firma Bepex Hutt Engineering GmbH im Jahre 1984 an die Firma Beacon Sweets, Südafrika ausgelieferten Formpressmachine
- Technische Zeichnungen eines in der an die Firma Beacon Sweets ausgelieferten Formpressmaschine eingesetzen Profil-Walzgeräts
- Seite 1 der Stückliste des in der an die Firma Beacon Sweets ausgelieferten Formpressmaschine eingesetzen Profil-Walzgeräts
- Fotographien des in der an die Firma Beacon Sweets ausgelieferten Formpressmaschine eingesetzten Profil-Walzgeräts
- Technische Zeichnung einer von der Firma Bepex Hutt Engineering GmbH im Jahre 1980 an die Firma Hai Tai, Korea ausgelieferten Formpressmaschine
- Technische Zeichnung eines in der an die Firma Hai Tai ausgelieferten Formpressmaschine eingesetzten Profil-Walzgeräts
- Propspekt der Firma Hosokawa Bepex GmbH betreffend Universal-Formpresssysteme
- Prospekt der Firma Hosokawa Bepex GmbH betreffend Schnellschneidemaschinen

## Beschreibung

Die Erfindung betrifft ein Verfahren zur kontinuierlichen Herstellung eines Produkts aus essbarer Masse, insbesondere Süßwarenmasse, indem aus der Masse ein Strang mit festgelegtem Querschnitt geformt wird, der Strang auf einem Transportband abgelegt und abgefördert wird und der Strang in einzelne Produkte zumindest quergeschnitten wird. Es wird auch eine Vorrichtung zur kontinuierlichen Herstellung eines Produkts aus essbarer Masse, insbesondere Süßwarenmasse, mit einem den Querschnitt der Masse bestimmenden Strangformer, einem angetriebenen Transportband zum Ablegen und Abfördern des von dem Strangformer gebildeten Strangs und zumindest einem Querschneider zum Unterteilen des Strangs in einzelne Produkte aufgezeigt.

Das Verfahren und die Vorrichtung dienen zur Herstellung von Produkten aus essbarer Masse, also insbesondere aus Süßwarenmasse und anderen Nahrungsmitteln. Die Massen sind flüssig bis pastös, also jedenfalls verformbar. Aus der verformbaren Masse wird zunächst ein Strang gebildet. Der Strang kann als Teppich oder Band über die Arbeitsbreite der Vorrichtung durchgehend erzeugt werden. Ein solcher durchgehender Strang wird dann längs und quer aufgeschnitten, so dass die einzelnen Produkte entstehen. Dabei handelt es sich in der Regel um Riegelware, also einzelne Produktstücke, die in der Regel im Horizontalschnitt etwa rechteckigen Umriss und im Vertikalschnitt quer zur Förderrichtung oft etwa quadratischen Querschnitt aufweisen. In Ausnahmefällen können auch Produkte mit im Horizontalschnitt kreisrunder oder abgerundeter Gestalt hergestellt werden, wenn das Längs- und Querschneiden durch eine Art Stanzvorgang erfolgt. Es ist aber auch möglich, den Strang von vornherein in Form mehrere separater Einzelstränge zu erzeugen, so dass auf das Längsschneiden verzichtet werden kann. Wenn in der vorliegenden Beschreibung von "Strang" die Rede ist, ist einerseits ein über die Arbeitsbreite reichender Gesamtstrang gemeint, der im Laufe der Formgebung in mehrere Produktstränge aufgeteilt, insbesondere längsgeschnitten, wird; andererseits kann von vornherein ein an einem Walzenformer gebildeter einzelner Produktstrang gemeint sein, der nur noch quergeschnitten werden muss.

Der Strang bzw. der einzelne Produktstrang wird nach der Strangbildung, die über einen Strangformer erfolgt, auf einem angetriebenen Transportband abgelegt. Sowohl die Bildung des Strangs wie auch die Abförderung des Strangs auf dem Transportband werden kontinuierlich durchgeführt. Auf diese Weise können Produkte aus Nougat-, Karamell-, Fudge- oder ähnlichen Massen, die auch feste Stücke, z. B. gehackte Mandeln, Nüsse und dergleichen, enthalten, hergestellt werden. Ein wesentliches Anwendungsgebiet ist auch die Herstellung von Müsliriegeln, die als wesentliche Bestandteile Cerealien zumindest enthalten. Die Massen können auch belüftet sein oder komprimierbare Bestandteile enthalten. Die Produkte können auch weiche Süßwarenmasse, Fruchtmasse, Krokant, Toffee, aber auch hochgekochte Zuckermassen, Karamell, Fettmassen, Nougatcreme etc. enthalten.

### STAND DER TECHNIK

Ein Verfahren und eine Vorrichtung der eingangs beschriebenen Art sind bekannt. Zur Bildung des Strangs wird ein Strangformer eingesetzt, der zwei angetriebene Walzen mit glatter Oberfläche aufweist, die auf Abstand zueinander angeordnet sind und damit zwischen sich einen Spalt bilden, in den die formbare Masse eingezogen wird. Die Masse tritt dann in Form eines Teppichs (Strang) mit einer der Spaltweite entsprechenden Höhe aus dem Strangformer aus und wird so kontinuierlich auf ein angetriebenes Transportband abgelegt. Die Bildungsgeschwindigkeit des Strangs oder Teppichs am Austritt des Strangformers entspricht der Geschwindigkeit, mit der das Transportband angetrieben wird. Entsprechend der Spaltweite ergibt sich die Höhe des Strangs und damit letztendlich die gewünschte Strang- bzw. Produkthöhe eines z. B. hergestellten Riegels. Der Strang wird längs- und quergeschnitten, so dass auf diese Weise die Produkte entstehen.

Je nach der Konsistenz, der Verarbeitungstemperatur, der Art der verarbeiteten Masse bzw. Massen sowie weiterer Parameter kann es erforderlich sein, einen oder mehrere Kühl- oder Temperierkanalabschnitte nach dem Walzenformer vorzusehen.

Auch die Anwendung einer Kalibrierwalze innerhalb der Vorrichtung ist bekannt. Eine solche Kalibrierwalze weist auch eine glatte Oberfläche auf und wirkt einseitig auf den Teppich bzw. Strang ein, um dessen Höhe zu vergleichmäßigen oder die gewünschte Höhe zu erreichen. Eine solche Kalibrierwalze wird gegen den auf dem Transportband abgeförderten Strang angestellt, wobei das Transportband entsprechend abgestützt ist.

Es ist auch bereits bekannt, einer solchen Kalibrierwalze eine Prägewalze nachzuordnen. Die Prägewalze besitzt eine profilierte Oberfläche, mit der sie ähnlich wie eine Kalibrierwalze gegen den auf dem Transportband abgeförderten Strang angestellt wird. Während die Kalibrierwalze nur eine ebene Fläche an dem Strang formt, werden von einer Prägewalze weitere Bereiche der Oberfläche des Strangs bzw. der Produktstränge erfasst und umgeformt. Auf diese Weise können Strangbereiche oder Produktstränge mit etwa halbrundem Querschnitt in dem nach oben gekehrten Bereich geformt werden. Eine Beeinflussung der Formgebung des Bodens des Strangs oder Produktstrangs ist jedoch nicht möglich. Der Boden bleibt flach und eben. Seine Gestalt ergibt sich zwangsläufig durch die Auflage des Strangs auf dem Transportband. Produkte, die in ihrem vertikalen Querschnitt quer zur Förderrichtung kreisrunde, elliptische, sechseckige oder gewellte Gestalt aufweisen, sind auf diese Weise nicht herstellbar.

EP-A-1 250 847 offenbart ein Verfahren zum kontinuierlichen Bereitstellen von längs und quer geschnittenen Süsswarenstücken, indem eine Süsswarenmasse gemischt, aus der Süsswarenmasse auf einem endlosen Förderer ein überbreites Süsswarenband ausgeformt, das Süsswarenband durch einen Kühlkanal gefördert und unter Entstehung von Randstreifen längs und quer geschnitten wird, wobei die Randstreifen in den Mischer zurückgefördert und in die Süsswarenmasse eingemischt werden, dadurch gekennzeichnet, dass die Randstreifen kontinuierlich in den Mischer zurückgefördert und auch kontinuierlich in die Süsswarenmasse eingemischt werden, und dass die Randstreifen vor der Einmischung in die Süsswarenmasse kontinuierlich aufgeheizt werden.

### AUFGABE DER ERFINDUNG

Der Erfindung liegt die Aufgabe zugrunde, ein Verfahren und eine Vorrichtung der eingangs beschriebenen Art aufzuzeigen, mit denen es möglich ist, Produkte herzustellen, die jedenfalls im Bereich des Bodens nicht-eben gestaltet sind. Die Produkte sollen in ihrem vertikalen Querschnitt quer zur Förderrichtung insbesondere kreisrunde, elliptische, sechseckige oder gewellte Gestalt aufweisen.

### LÖSUNG

Die Aufgabe der Erfindung wird erfindungsgemäß mit den Merkmalen der unabhängigen Patentansprüche 1 und 5 gelöst.

### BESCHREIBUNG DER ERFINDUNG

Bei dem erfindungsgemäßen Verfahren zur kontinuierlichen Herstellung eines Produktes aus essbarer Masse wird zunächst aus der Masse ein Strang mit festgelegtem Querschnitt geformt. Dies geschieht mit einem Strangformer. Der geformte Strang wird auf einem Transportband abgelegt und abgefördert. Der Strang wird in einzelne Produkte zerteilt, in der Regel also längs- und quergeschnitten. Der Strang wird über eine Unterbrechungsstelle des Transportbandes gefördert. Dabei bewegt sich der Strang über die Unterbrechungsstelle des Transportbandes hinweg. Während dieser Bewegung wird er zumindest von zwei Seiten geprägt und dabei nicht nur auf seine Oberfläche, sondern auch im Bereich des Bodens geformt. Die Prägung kann den gesamten Umfang, also die gesamte geschlossene Umfangslinie des Strangs bzw. des Produktstrangs umfassen, mit dem der Strang erzeugt wird, den also letztendlich auch das Produkt aufweisen soll. Es ist aber auch möglich, nur wesentliche Bestandteile der Umfangslinie beidseitig zu prägen und beispielsweise zusätzlich noch einen Längsschneider einzusetzen, um einen Strang in Produktstränge definitiv zu unterteilen. Das Längsscheiden kann vor oder nach dem Prägen erfolgen.

Für die Bildung der Unterbrechungsstelle des Transportbandes stehen verschiedene Möglichkeiten zur Verfügung. Beispielsweise kann die Unterbrechungsstelle zwischen zwei einander zugeordneten und mit Abstand zueinander angeordneten Transportbändern gebildet sein. Es ist aber auch möglich, ein gemeinsames Transportband vorzusehen, welches zur Bildung der Unterbrechungsstelle entsprechend umgeleitet wird. Bei der zweiseitigen Prägung sollen insbesondere Bodenbereiche und nach oben gekehrte Oberflächenbereiche erreicht werden. Die Prägung wird in der Regel so durchgeführt werden, dass sie mehr oder weniger symmetrisch zu der Ebene erfolgt, die durch die Oberfläche des Transportbandes festgelegt ist.

Wenn mit der beidseitigen Prägung die gesamte Umfangslinie des Querschnittes des Produktes gestaltet wird, kann damit gleichzeitig auch die Unterteilung des Strangs in einzelne Produktstränge erfolgen, so dass ein gesondertes Längsschneiden entbehrlich wird. Das Längsscheiden kann vor oder nach dem Prägen erfolgen. Es ist aber auch möglich, mit der beidseitigen Prägung nur einen Teil der Umfangslinie des Querschnittes des Produktes zu gestalten, wobei dann die definitive Trennung des Strangs in einzelne Produktstränge durch nachfolgendes Längsschneiden erfolgt.

Das Prägen kann insbesondere durch Walzen erfolgen, d. h. es handelt sich um einen Walzvorgang, bei dem walzen- oder trommelförmige Prägeelemente um Achsen rotierend angetrieben sind. Die Achsen sind in einer zur Förderrichtung senkrechten Ebene angeordnet. Es ist aber auch möglich, z. B. düsenartige Werkzeuge vorzusehen, mit deren Hilfe die gesamte Umfangslinie des Querschnittes der vorher gebildeten Produktstränge an der Unterbrechungsstelle umgeformt wird.

Eine Vorrichtung zur Durchführung des Verfahrens besitzt einen den Querschnitt der Masse als Strang bestimmenden Strangformer und ein angetriebenes Transportband zum Ablegen und Abfördern des von dem Strangformer gebildeten Strangs. In aller Regel ist auch zumindest ein Querschneider zum Unterteilen des Strangs in einzelne Produkte vorgesehen. Weitere Bestandteile der Vorrichtung können Kühlkanalabschnitte und/oder ein Längsschneider sein. Im Bereich des Transportbandes ist auf jeden Fall eine Unterbrechungsstelle gebildet, an der der abgelegte Strang von dem Transportband nicht unmittelbar abgestützt wird. Der Strang wird vielmehr freihängend über die Unterbrechungsstelle gefördert. Dabei greifen an dem Strang im Bereich der Unterbrechungsstelle mindestens zwei einander ergänzende Prägeeinheiten an, mit denen der Querschnitt des Strangs umgeformt wird. Die Umformung geschieht am frei geförderten Strang. Für die Ausbildung der Unterbrechungsstelle einerseits und-der Prägeeinheiten andererseits ergeben sich für den Fachmann verschiedene Möglichkeiten. So können die Prägeeinheiten als Prägebänder ausgebildet sein, die umlaufend angetrieben und geführt sind. Eine besonders einfache und wirkungsvolle Realisierungsmöglichkeit ergibt sich durch rotierend angetriebene Walzen, deren Oberflächen entsprechend profiliert ausgebildet sein. In aller Regel wird es sich dabei um nutenartige umlaufende Vertiefungen auf der Oberfläche der Walzen handeln, beispielsweise um halbkreisförmige Vertiefungen, wenn Produktstränge mit kreisrundem Querschnitt erzeugt werden sollen. Es ist eine Vielzahl von Formgebungen und Querschnittsgestaltungen möglich. So sind ovale, elliptische, rechteckig abgerundete, fünfeckige, sechseckige oder ähnliche Querschnitte möglich. Auch bandförmige Querschnitte in V- bzw. W-Form sind ohne weiteres möglich. Entsprechend sind die Walzen der Prägeeinheiten auf ihren Oberflächen profiliert.

Die Prägeeinheiten weisen Achsen auf, die bevorzugt in der zu der Ebene des Transportbandes parallelen Ebenen angeordnet sind. Die Prägewalzen können oben und unten, jeweils relativ zu der von dem Transportband auf der Oberfläche aufgespannten Ebene angeordnet sein. Die Prägewalzen können gleiche oder ungleiche Profile auf ihren Oberflächen besitzen, aus denen dann die Querschnittsform des jeweiligen Produktstrangs gebildet wird. Die Prägeeinheiten in Form angetriebener Walzen können gleiche oder ungleiche Durchmesser aufweisen. Die Profilierung in Umfangsrichtung kann konstant oder nicht konstant ausgebildet sein. Beispielsweise ist es auf diese Weise möglich, in die Produktstränge Kerben oder Sollbruchstellen einzuformen, mit deren Hilfe eine leichtere Unterteilung des Produktstrangs in die einzelnen Produkte möglich ist. Unter Umständen kann auf eine gesonderte Querschneidestation in diesem Zusammenhang verzichtet werden. Diese aufgezeigten Möglichkeiten sind jedoch stark von der Art der Masse, ihrer Konsistenz sowie weiteren Parametern abhängig und können im Einzelfall entsprechend angepasst und gewählt werden. Auch der Abstand der Prägeeinheiten zueinander kann einstellbar ausgebildet sein, um eine Längsschneidefunktion mehr oder weniger zu verwirklichen. In der Regel werden die Prägeeinheiten in Form angetriebener Walzen mit einer Oberflächen- bzw. Umfangsgeschwindigkeit angetrieben, die der Fördergeschwindigkeit des Strangs auf dem Transportband entspricht. Es ist jedoch ohne weiteres möglich, die Geschwindigkeiten der Oberflächen der Prägeeinheit auch abweichend davon festzulegen bzw. einzustellen. Dies gilt auch im Verhältnis zur Geschwindigkeit des Transportbandes.

Weiterhin können die Prägeeinheiten an einen Temperierkreislauf angeschlossen sein. Oft wird ein solcher Temperierkreislauf als Kühlkreislauf ausgebildet, um gleichzeitig mit der Prägung eine Reduzierung der Temperatur der warm verarbeiteten Massen zu erreichen. Es ist aber auch möglich, dass die Prägeeinheit eine Einrichtung zur Temperierung ihrer Oberflächen aufweist. In Einzelfällen muss es sich dabei sogar um eine Heizeinrichtung handeln. Wenn die in der Vorrichtung zu verarbeitenden Massen dies erfordern, kann sich auch die Reihenfolge der einzelnen Stationen in der Vorrichtung ändern. So ist es durchaus möglich, die durch die Prägeeinheiten gebildete Prägestation z. B. vor oder nach einem Kühlkanalabschnitt anzuordnen. Die Prägestation kann auch in unterschiedlicher Entfernung zu einer Querschneidestation vorgesehen sein. Falls die Prägeeinheit auch eine gewisse Querschneidefunktion erfüllt oder zumindest vorbereitet, kann die zusätzliche Anordnung von Querschneidestationen auch entfallen und/oder durch eine Brechstation ersetzt werden, wobei es der Gestalt der Produkte durchaus förderlich sein kann, wenn die in der Brechstation erzeugte Gestaltung unregelmäßig erfolgt, so dass eine gewisse Gestaltungsbreite, ähnlich einer Handarbeit, erreicht wird. In der Regel kann auf eine Querscheidestation nicht verzichtet werden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematisierte Seitenansicht einer ersten Ausführungsform der Vorrichtung.
- **Fig. 2**: zeigt eine schematisierte Seitenansicht einer zweiten Ausführungsform der Vorrichtung.
- **Fig. 3**: zeigt eine Ansicht gemäß der Linie III-III in Fig. 1.
- **Fig. 4**: zeigt verschiedene mögliche Querschnitte von Produktsträngen bzw. Produkten.

### FIGURENBESCHREIBUNG

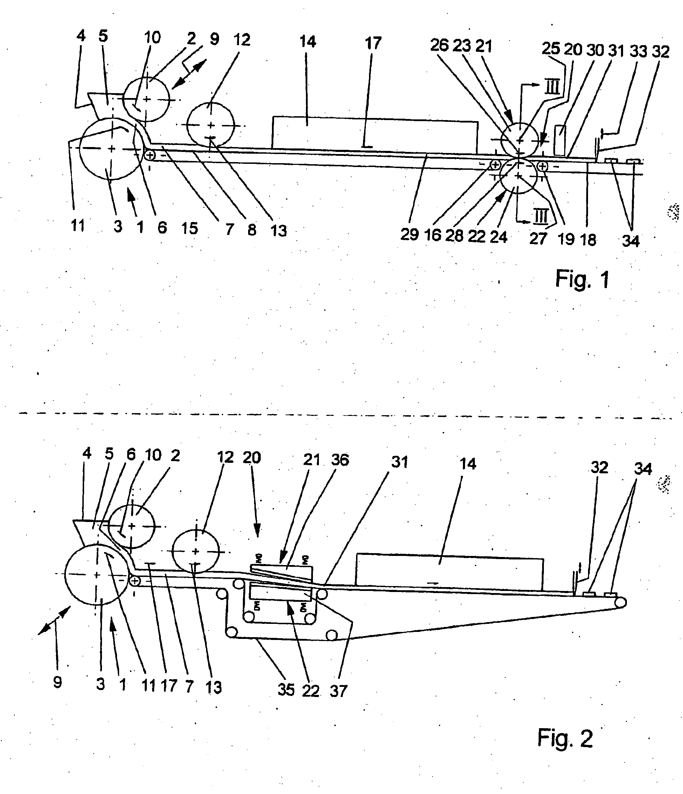

**Fig. 1** zeigt eine Vorrichtung, die zur Durchführung des Verfahrens geeignet ist, mit ihren für die Erfindung wesentlichen Bestandteilen. Die Vorrichtung weist einen Strangformer 1 auf. Der Strangformer 1 besteht im Wesentlichen aus zwei glatten Walzen 2 und 3, denen ein Trichter 4 zur Aufnahme der zu verformenden Masse 5 vorgeschaltet ist. Die Masse wird durch eine hier nicht dargestellte Einrichtung kontinuierlich in den Trichter 5 aufgegeben bzw. nachgefüllt. Die beiden Walzen 2 und 3 bilden miteinander einen Austrittsspalt 6, mit dessen Hilfe die Masse 5 aus dem Trichter 4 eingezogen und in den vorgegebenen Querschnitt verformt wird, so dass hier ein Strang 7 gebildet wird, der auf einem dem Strangformer 1 nachgeschalteten angetriebenen Transportband 8 abgelegt wird. Zur Veränderung der Weite bzw. Höhe des Austrittsspalts 6 ist eine nicht dargestellte Stelleinrichtung vorgesehen, mit deren Hilfe die Spaltweite zwischen den Walzen 2 und 3 in Richtung eines Doppelpfeils 9 veränderbar ist. Die Stelleinrichtung kann einer oder auch beiden Walze 2, 3 zugeordnet sein, da es hinsichtlich der Spaltweite nur auf die Relativverstellung der Walzen 2 und 3 zueinander ankommt. Es ist auch möglich, z. B. nur eine der Walzen 2 oder 3 zu verschwenken, um eine besonders feinfühlige Veränderung der Weite des Austrittsspalts 6 zu erzielen.

Zumindest die Walze 2 wird gemäß Pfeil 10 angetrieben. In der Regel wird auch die Walze 3 gemäß Pfeil 11 angetrieben. Die Stelleinrichtung kann bei konstanter oder auch bei veränderbarer Weite des Austrittsspalts 6 auch dem Antrieb der Walzen 2 und/oder 3 zugeordnet sein. Durch die Antriebsgeschwindigkeit der Walzen 2, 3 wird die Bildungsgeschwindigkeit festgelegt bzw. bestimmt, mit der die Masse 5 durch den Austrittsspalt 6 hindurchtritt und damit der Strang 7 gebildet wird. Damit wird der Anfangsquerschnitt des Strangs 7 festgelegt bzw. bestimmt. In der Regel stimmt diese Antriebsgeschwindigkeit der Walzen 2 und 3 und damit die Bildungsgeschwindigkeit mit der Antriebsgeschwindigkeit des Transportbandes 8 überein. Je nach der Konsistenz und den übrigen Eigenschaften, beispielsweise der Temperatur der Masse, wird so auf die Bildung des Querschnitts des Strangs 7 im Bereich des Strangsformers 1 in Verbindung mit dem Transportband 8 Einfluss genommen. Die Bildungsgeschwindigkeit im Bereich des Strangformers 1 muss jedoch nicht unbedingt mit der Antriebsgeschwindigkeit des Transportbandes 8 übereinstimmen. Auch hier können Unterschiede zwischen diesen beiden Geschwindigkeiten je nach der Art der Masse sinnvoll oder sogar erforderlich sein, um einen gleichmäßigen Strang 7 mit dem dazu vorgesehenen, geringfügig gedehnten oder gedrückten Querschnitt auf dem Transportband 8 abzulegen.

In der-Regel wird der aus dem Austrittsspalt 6 austretende Strang 7 eine etwas größere Höhe aufweisen, als es der gewünschten Produkthöhe entspricht. Demzufolge wird auch in der Regel eine angetriebene Kalibrierwalze 12 eingesetzt, die gegenüber dem in diesem Bereich abgestützten Transportband 8 angestellt wird. Die Kalibrierwalze 12 wird gemäß Pfeil 13 angetrieben und dient dazu, die Höhe des Strangs 7 zu vergleichmäßigen. In der Regel besitzt die Masse 5 des Strangs 7 auch zusammendrückbare Bestandteile, so dass durch die Wirkung der Kalibrierwalze 12 eine gewisse Verdichtung des Strangs 7 eintritt oder zumindest eintreten kann. Im Bereich des Transportbandes 8 kann weiterhin ein Temperierkanal 14 vorgesehen sein, mit dessen Hilfe der Strang 7 beim Durchlauf temperiert, also gekühlt oder erwärmt wird. Die Anordnungsstelle des Temperierkanals 14 kann auch vor der Kalibrierwalze 12 erfolgen. Sie richtet sich nach der Art und den Eigenschaften der Masse 5 bzw. des Strangs 7.

Das Transportband 8 ist um Umlenkrollen 15 und 16 geführt und wird gemäß Pfeil 17 angetrieben, so dass der auf der Oberfläche des Transportbandes 8 aufliegende Strang 7 auch gemäß Pfeil 17 abgefördert wird.

In Relation zu dem Transportband 8 ist ein weiteres Transportband 18 vorgesehen. Der Anfang des Transportbandes 18 wird um die Umlenkrolle 19 geführt. Das Transportband 18 ist in gleicher Richtung wie das Transportband 8 angetrieben. Die Antriebsgeschwindigkeit der Transportbänder 8 und 18 kann gleich, aber auch unterschiedlich gewählt bzw. eingestellt werden.

Zwischen dem Ende des Transportbandes 8 und dem Anfang des Transportbandes 18 ist eine Unterbrechungsstelle 20 gebildet. Die Länge der Unterbrechungsstelle in Förderrichtung gemäß Pfeil 17 wird hier durch den Abstand der Umlenkrollen 16 und 19 festgelegt. Im Bereich der Unterbrechungsstelle 20 wird der Strang 7 frei durchhängend gefördert. An der so gebildeten Unterbrechungsstelle 20 sind zwei Prägeeinheiten 21 und 22 vorgesehen, deren Aufgabe es ist, auf die Formgebung der Oberfläche des Strangs 7 einzuwirken. Dabei geht es darum, den Strang 7 an dieser Stelle bereits in Längsrichtung zu unterteilen, also einzelne Produktstränge hinsichtlich ihres Querschnittes zu gestalten und umzuformen. In dem in Fig. 1 dargestellten Ausführungsbeispiel ist als Prägeeinheit 21 eine Prägewalze 23 vorgesehen. Die Prägeeinheit 22 wird von einer Prägewalze 24 gebildet. Die Prägewalze 23 wird um ihre Achse 25 in Richtung des Pfeils 26 angetrieben. Entsprechend wird die Prägewalze 24 um ihre Achse 27 in Richtung des Pfeils 28 angetrieben. Die Oberflächengeschwindigkeit der Prägewalzen 23-und 24 wird in der Regel gleich und auch gleich der Fördergeschwindigkeit des Strangs 7 auf dem Transportband 8 gewählt. In Ausnahmefällen und unter Abstimmung auf die Eigenschaften der Masse 5 des Strangs 7 können aber auch unterschiedliche Geschwindigkeiten sinnvoll sein. Auch die Prägewalzen 23 und 24 können in ihrem relativen Abstand zueinander einstellbar vorgesehen sein. Die Einstellung kann so sein, dass sie einander berühren oder gerade nicht berühren. Die Anordnung der Prägewalzen 23 und 24 erfolgt bevorzugt so, dass der an der Unterbrechungsstelle 20 frei geförderte Strang 7 möglichst wenig aus der Ebene 29 in der Mitte der Höhe des Strangs 7 ausgelenkt wird. Es versteht sich, dass die Ebene 29 horizontal ausgerichtet vorgesehen ist. Die Achsen 25 und 27 der beiden Prägewalzen 23 und 24 befinden sich in Ebenen, die zur Ebene 29 parallel und insbesondere gleichabständig zu dieser vorgesehen sind. Aber auch andere Anordnungsmöglichkeiten sind denkbar, bei denen die Achsen 25 und 27 jedenfalls in der Vertikalebene senkrecht zur Förderrichtung gemäß Pfeil 17 angeordnet sind. Die Anordnung richtet sich in manchen Fällen nach dem Querschnittsprofil der zu erzeugenden Produkte.

Hinter den Prägeeinheiten 21, 22 und damit hinter der Unterbrechungsstelle 20 ist in vielen Fällen ein Längsschneider 30 vorgesehen, mit dessen Hilfe der zusammenhängende, sich über die Arbeitsbreite erstreckende Strang 7 in einzelne Produktstränge 31 unterteilt wird. Dies ist insbesondere dann der Fall, wenn die Prägewalzen 23 und 24 keine Längsschneidefunktion erfüllen. Der Längsschneider 30 kann aber auch vor der Unterbrechungsstelle und damit vor den Prägewalzen 23 und 24, ja sogar vor dem Temperierkanal 14 angeordnet sein. In solchen Fällen werden die einzelnen Produktstränge 31 nebeneinander über die Arbeitsbreite in jeweils geringfügigen Abstand zueinander gebracht und dann von den Prägeeinheiten 21, 22 umfangsmäßig umgeformt. Hinter dem Längsschneider 30 ist ein schematisch dargestellter Querschneider 32 vorgesehen, der gemäß Doppelpfeil 33 relativ zur Oberfläche des Transportbandes 18 angetrieben wird und dabei die Produktstränge 31 in einzelne Produkte 34 unterteilt. In der Regel ergeben sich damit mehrere reihenweise nebeneinander liegende Produktreihen aus den Produkten 34. Die Produkte 34 besitzen genau den Querschnitt, der letztlich durch die Prägeeinheiten 21, 22 geformt worden ist. Der Querschneider 32 kann so arbeiten, dass die Produktstränge 31 vollständig durchtrennt, also zerhackt, werden. Es ist aber auch möglich, auf eine vollständige Durchtrennung zu verzichten und gleichsam nur Sollbruchstellen einzuformen. In solchen Fällen wird dann in der Regel eine nachgeschaltete Brecheinrichtung erforderlich.

Das in **Fig. 2** dargestellte zweite Ausführungsbeispiel einer Vorrichtung zur kontinuierlichen Herstellung eines Produktes bzw. mehrerer Produkte 34 ist in weiten Bereichen ähnlich aufgebaut wie das Ausführungsbeispiel der Fig. 1, so dass hierauf verwiesen werden kann. Statt zweier getrennter und getrennt angetriebener Transportbänder 8 und 18 ist ein gemeinsames Transportband 35 vorgesehen, welches um eine Anzahl von Umlenkrollen in der dargestellten Weise geführt und gemäß Pfeil 17 angetrieben ist. Auch auf diese Weise ist es möglich, eine Unterbrechungsstelle 20 zu bilden, in der die Prägeeinheiten 21 und 22 angeordnet sind. Die Prägeeinheiten 21 und 22 sind hier als Ziehdüsen 36 und 37 ausgebildet, federnd gelagert und gegeneinander angestellt. Die Ziehdüsen 36 und 37 können die gesamte Umfangsfläche des Strangs 7 bearbeiten und damit den Gesamtquerschnitt formen. Die Ziehdüsen 36 und 37 können auch eine Längsschneidefunktion erfüllen, so dass der Strang 7 am Austritt aus den Ziehdüsen 36 und 37 in einzelne nebeneinander liegende Produktstränge 31 unterteilt ist und die gesonderte Anordnung eines Längsschneiders entbehrlich wird.

Weiterhin ist gegenüber dem Ausführungsbeispiel der Fig. 1 unterschiedlich, dass der Temperierkanal 14 nach der Unterbrechungsstelle 20 angeordnet ist. Schließlich ist auch hier ein Querschneider 32 vorgesehen, der die einzelnen Produktstränge 31 in einzelne Produkte 34 unterteilt. Der Einlauf der Produktstränge 31 in den Temperierkanal kann tiefer gelegt sein als der Einlauf des Strangs 7 in die Ziehdüsen 36 und 37.

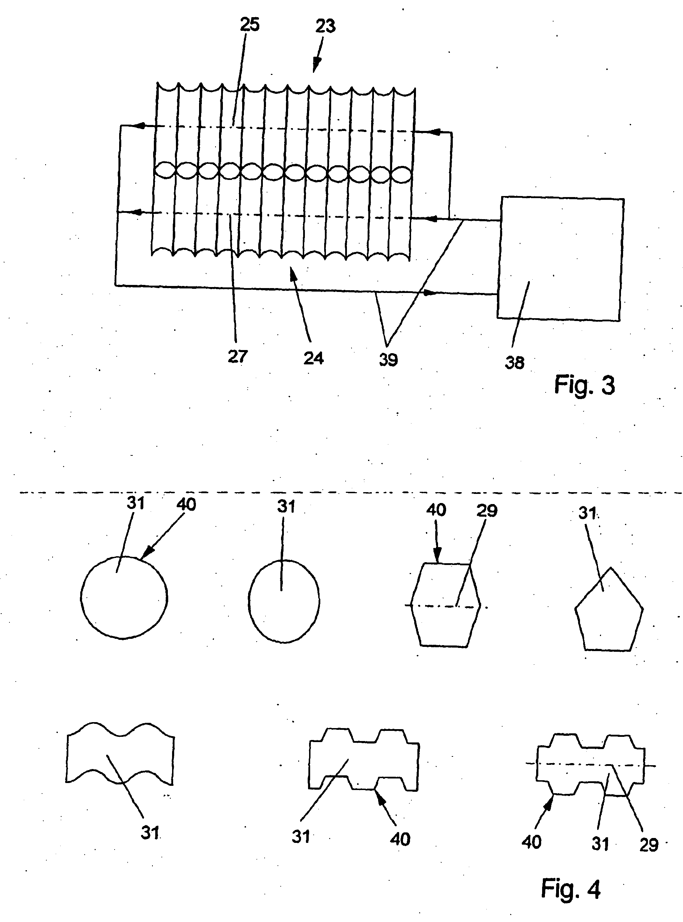

**Fig. 3** verdeutlicht einen Schnitt gemäß der Linie III-III in Fig. 1, also an der Stelle der beiden Prägewalzen 23 und 24 an der Unterbrechungsstelle 20. Es wird hier im Wesentlichen die gebogene Oberfläche der Profilwalzen 23 und 24 verdeutlicht. Die Profilwalzen 23 und 24 sind unter Berührung aneinander angestellt, so dass diese Prägeeinheiten 21, 22 auch Längsschneidefunktion erfüllen. Es ist erkennbar, dass der gesamte Umfangsquerschnitt des Strangs bzw. der sich bildenden Produktstränge bearbeitet bzw. geformt wird. Die beiden Prägewalzen 23 und 24 können an eine Einrichtung 38 zum Temperieren der Prägewalzen 23 und 24 angeschlossen sein. Ein Kreislauf aus entsprechenden Leitungsabschnitten 39 ist schematisch angedeutet.

In **Fig**. **4** sind mögliche Querschnitte 40 von Produktsträngen 31 dargestellt, die nach dem erfindungsgemäßen Verfahren und mit den aufgezeigten Vorrichtungen beherrschbar sind. Man erkennt einen kreisförmigen Querschnitt, einen ellipsenartigen Querschnitt, einen sechseckigen oder auch fünfeckigen Querschnitt sowie gewellte und eingebuchtete Querschnitte 40 in symmetrischer Anordnung zur Ebene 29. Aber auch Gestaltungen mit über die Breite konstanter Dicke in gewellter Form sind möglich.

### BEZUGSZEICHENLISTE

- 1: Strangformer
- 2: Walze
- 3: Walze
- 4: Trichter
- 5: Masse
- 6: Austrittsspalt
- 7: Strang
- 8: Transportband
- 9: Doppelpfeil
- 10: Pfeil
- 11: Pfeil
- 12: Kalibrierwalze
- 13: Pfeil
- 14: Temperierkanal
- 15: Umlenkrolle
- 16: Umlenkrolle
- 17: Pfeil
- 18: Transportband
- 19: Umlenkrolle
- 20: Unterbrechungsstelle
- 21: Prägeeinheit
- 22: Prägeeinheit
- 23: Prägewalze
- 24: Prägewalze
- 25: Achse
- 26: Pfeil
- 27: Achse
- 28: Pfeil
- 29: Ebene
- 30: Längsschneider
- 31: Produktstrang
- 32: Querschneider
- 33: Doppelpfeil
- 34: Produkt
- 35: Transportband
- 36: Ziehdüse
- 37: Ziehdüse
- 38: Einrichtung
- 39: Leitungsabschnitt
- 40: Querschnitt

## Patentansprüche

1. Verfahren zur kontinuierlichen Herstellung eines Produkts aus essbarer Masse, insbesondere Süßwarenmasse, indem
aus der Masse (5) zunächst ein Strang (7) mit festgelegtem Querschnitt geformt wird,
der so geformte Strang (7) dann auf einem Transportband (8, 35) abgelegt und mit diesem Transportband (8, 35) abgefördert wird,
der Strang (7) über eine Unterbrechungsstelle (20) des Transportbandes (8, 18; 35) gefördert wird und in der Unterbrechungsstelle (20) von zwei Seiten und dabei nicht nur auf seiner Oberfläche, sondern auch im Bereich des Bodens umformend geprägt wird, und
schließlich der Strang (7) in einzelne Produkte (34) zumindest quergeschnitten wird.

2. Verfahren nach Anspruch 1, **dadurch gekennzeichnet, dass** mit der beidseitigen Prägung die gesamte Umfangslinie des Querschnitts (40) der1 Produkte (34) gestaltet wird.

3. Verfahren nach Anspruch 1, dadurch gekenntzeichnet, dass mit der beidseitigen Prägung nur ein Teil der Umfangslinie des Querschnitts (40) der Produkte (34) gestaltet wird und dass die restliche Gestaltung durch Längsschneiden erfolgt.

4. Verfahren nach mindestens einem der Ansprüche 1 bis 3, **dadurch gekennzeichnet, dass** das Prägen durch Walzen erfolgt.

5. Vorrichtung zur kontinuierlichen Herstellung eines Produkts aus essbarer Masse, insbesondere Süßwarenmasse, mit
einem den Querschnitt der Masse (5) bestimmenden Strangformer (1),
einem angetriebenen Transportband (8) zum Ablegen und Abfördern des von dem Strangformer (1) gebildeten Strangs (7) und zumindest einem Querschneider (32) zum Unterteilen des Strangs (7) in einzelne Produkte (34), insbesondere nach mindestens einem der Ansprüche 1 bis 4, **dadurch gekennzeichnet, dass**
im Bereich des Transportbandes (8, 18; 35) eine Unterbrechungsstelle (20) gebildet und dort zwei einander ergänzende Prägeeinheiten (21, 22) zum Umformen des Querschnitts des Strangs (7) nicht nur auf seiner Oberfläche, sondern auch im Bereich des Bodens vorgesehen sind.

6. Vorrichtung nach Anspruch 5, **dadurch gekennzeichnet, dass** als Prägeeinheiten (21, 22) rotierend angetriebene Prägewalzen (23, 24) vorgesehen sind, deren Oberflächen profiliert ausgebildet sind.

7. Vorrichtung nach mindestens einem der Ansprüche 5 oder 6, **dadurch gekennzeichnet, dass** die Prägeeinheiten (21, 22) Achsen (25, 27) aufweisen, die in zu der Ebene (29) des Transportbandes (8, 35) parallelen Ebenen angeordnet sind.

8. Vorrichtung nach mindestens einem der Ansprüche 5 bis 7, **dadurch gekennzeichnet, dass** die Prägeeinheiten (21, 22) symmetrisch profilierte Oberflächen aufweisen.

9. Vorrichtung nach mindestens einem der Ansprüche 5 bis 8, **dadurch gekennzeichnet, dass** der Abstand der Prägeeinheiten (21, 22) zueinander einstellbar ausgebildet ist und/oder die Geschwindigkeiten der Oberflächen der Prägeeinheiten (21, 22) zueinander und/oder zur Geschwindigkeit des Transportbandes (8, 35) einstellbar ausgebildet sind.

10. Vorrichtung nach mindestens einem der Ansprüche 5 bis 9, **dadurch gekennzeichnet, dass** die Prägeeinheiten (21, 22) eine Einrichtung (38) zur Temperierung ihrer Oberflächen aufweisen.

## Claims

1. A method for the continuous production of a product of an eatable substance, especially a confectionery substance, comprising the steps of:
forming the substance (5) into a slab (7) having a predetermined cross section,
laying down the so formed slab (7) on the surface of a conveyor belt (8, 35) and transporting the formed slab (7) with the conveyor belt (8, 35),
conveying the slab (7) over a point of break (20) of the conveyor belt (8, 18; 35) and embossing the slab (7) in the point of break (20) from two sides and thereby not only on its surface extending upwardly, but also in the region of its bottom, and
finally cutting the slab (7) at least transversely into the single products (34).

2. The method of claim 1, **characterized in that** the entire circumference of the cross section (40) of the products (34) is formed by embossing from the two sides.

3. The method of claim 1, **characterized in that** only a part of the circumference of the cross section (40) of the products (34) is formed by embossing from the two sides and **in that** the other shaping is performed by longitudinal slitting.

4. The method of at least one of claims 1 to 3, **characterized in that** the embossing is performed by rolling.

5. An apparatus for the continuous production of a product to be made from an eatable substance, especially a confectionery substance, including
a slab former (1) defining the cross section of the substance (5),
a driven conveyor belt (8) for laying down and transporting the slab (7) formed by the slab former (1), and at least a transverse cutter (32) for cutting the slab (7) into single products (34), especially of at least one of claims 1 to 4, **characterized in that**
a point of break (20) is formed in the region of the conveyor belt (8, 18; 35) and two cooperating embossing elements (21, 22) are provided there to deform the cross section of the slab (7) not only on its surface extending upwardly, but also in the region of its bottom.

6. The apparatus of claim 5, **characterized in that** rotationally driven embossing rollers (23, 24) are provided as the embossing elements (21, 22), the surfaces of the embossing rollers (23, 24) being profiled.

7. The apparatus of at least one of claims 5 and 6, **characterized in that** the embossing elements (21, 22) have axes (25, 27) being arranged in planes being parallel to the plane of the conveyor belt (8, 35).

8. The apparatus of at least one of claims 5 to 7, **characterized in that** the embossing elements (21, 22) comprise symmetrically profiled surfaces.

9. The apparatus of at least one of claims 5 to 8, **characterized in that** the distance between the embossing elements (21, 22) is adjustable and/or the speeds of the surfaces of the embossing elements (21, 22) to each other and/or to the speed of the conveyor belt (8, 35) is settable.

10. The apparatus of at least one of claims 5 to 9, **characterized in that** the embossing elements (21, 22) include a device (38) for tempering the surfaces.

## Revendications

1. Procédé de fabrication continue d'un produit à partir d'une masse comestible, en particulier une masse de confiserie, dans lequel:
un brin (7) ayant une section définie est d'abord formé à partir de la masse (5),
le brin (7) ainsi formé est ensuite déposé sur une bande transporteuse (8, 35) et éloigné au moyen de cette bande transporteuse (8, 35),
le brin (7) est transporté au travers d'une zone d'interruption (20) de la bande transporteuse (8, 18; 35) et il est façonné dans la zone d'interruption (20) de manière à modifier sa forme depuis deux côtés, et ce faisant, non seulement sur sa surface, mais aussi au niveau du fond, et
le brin (7) est finalement découpé au moins de façon transversale en produits individuels (34).

2. Procédé selon la revendication 1, **caractérisé en ce qu'**avec le façonnage effectué sur les deux côtés, le périmètre complet de la section (40) des produits (34) est mis en forme.

3. Procédé selon la revendication 1, **caractérisé en ce qu'**avec le façonnage effectué sur les deux côtés, une partie seulement du périmètre de la section (40) des produits (34) est mise en forme et le reste de la mise en forme est effectué par le biais d'une découpe longitudinale.

4. Procédé selon au moins l'une des revendications 1 à 3, **caractérisé en ce que** le façonnage est effectué par le biais de cylindres.

5. Dispositif de fabrication continue d'un produit à partir d'une masse comestible, en particulier une masse de confiserie, comprenant:
un moyen de formation de brin (1) déterminant la section de la masse (5),
une bande transporteuse entraînée (8) destinée au dépôt et à l'éloignement du brin (7) formé par le moyen de formation de brin (1) et au moyen un moyen de découpe transversale (32) destiné à la division du brin (7) en produits individuels (34), en particulier selon au moins l'une des revendications 1 à 4, **caractérisé en ce que**:
dans la zone de la bande transporteuse (8, 18; 35), une zone d'interruption (20) est réalisée, et à cet endroit, deux unités de façonnage se complétant mutuellement (21, 22) destinées à modifier la forme de la section du brin (7) non seulement sur sa surface, mais aussi au niveau du fond, sont prévues.

6. Dispositif selon la revendication 5, **caractérisé en ce que** comme unités de façonnage (21, 22), il est prévu des cylindres de façonnage entraînés en rotation (23, 24), dont les surfaces sont profilées.

7. Dispositif selon au moins l'une des revendications 5 ou 6, **caractérisé en ce que** les unités de façonnage (21; 22) présentent des axes (25, 27) qui sont agencés dans des plans parallèles au plan (29) de la bande transporteuse (8, 35).

8. Dispositif selon au moins l'une des revendications 5 à 7, **caractérisé en ce que** les unités de façonnage (21, 22) présentent des surfaces profilées de façon symétrique.

9. Dispositif selon au moins l'une des revendications 5 à 8, **caractérisé en ce que** la distance entre les unités de façonnage (21, 22) est réglable et/ou **en ce que** les vitesses des surfaces des unités de façonnage (21, 22) l'une par rapport à l'autre et/ou par rapport à la vitesse de la bande transporteuse (8, 35) sont réglables.

10. Dispositif selon au moins l'une des revendications 5 à 9, **caractérisé en ce que** les unités de façonnage (21, 22) présentent un dispositif (38) destiné à équilibrer la température de leurs surfaces.
